# EUROPEAN PATENT SPECIFICATION

(11) **EP 2 843 216 B1**
(45) Date of publication and mention of the grant of the patent: **21.02.2018**
(21) Application number: 12875144.3
(22) Date of filing: 27.04.2012
(51) Int. Cl.: F02D 41/04, F01N 3/20, F02D 45/00, F01N 3/08, F02D 41/02, F02D 41/14

(54) **INTERNAL COMBUSTION ENGINE CONTROL DEVICE**
STEUERVORRICHTUNG FÜR EINEN VERBRENNUNGSMOTOR
DISPOSITIF DE COMMANDE DE MOTEUR À COMBUSTION INTERNE

(43) Date of publication of application: 04.03.2015
(73) Proprietor: Toyota Jidosha Kabushiki Kaisha, Toyota-shi, Aichi 471-8571 (JP)
(72) Inventor: NOGI Yoshito, Toyota-shi Aichi 471-8571 (JP); NOZAKI Yusuke, Toyota-shi Aichi 471-8571 (JP); OHASHI Nobumoto, Toyota-shi Aichi 471-8571 (JP)
(74) Representative: D Young & Co LLP
(86) International application number: PCT/JP2012/061403
(87) International publication number: WO 2013/161062

(56) References cited:
- EP-A1- 1 651 845
- EP-A1- 1 745 836
- JP-A- H06 229 231
- JP-A- H06 229 231
- JP-A- 2000 192 811
- JP-A- 2001 082 137
- JP-A- 2003 035 132
- JP-A- 2004 108 176
- JP-A- 2009 068 481
- JP-A- 2010 249 113

## Description

### Technical Field

The present invention relates to a control device for an internal combustion engine (hereinafter also referred to as an "engine"). In particular, the present invention relates to an improvement of control for recovering performance of an exhaust purification catalyst provided in an exhaust system.

### Background Art

Conventionally, in an engine exhaust system that is mounted, for example, on a vehicle, an exhaust purification catalyst is provided so that harmful components such as hydrocarbon (HC), carbon monoxide (CO), and nitrogen oxide (NOx) in exhaust emission are made harmless. Also, it is known that control for recovering purification performance of the exhaust purification catalyst is executed (see, as one example, Patent Document 1 listed hereinafter).

As the exhaust purification catalyst of, for example, a diesel engine (hereinafter also referred to as simply the "engine"), a NOx storage/reduction catalyst (NSR catalyst) to treat NOx in exhaust emission having a high oxigen concentration (a lean air-fuel ratio) is known. The NSR catalyst absorbes NOx in a state in which the exhaust air-fuel ratio is lean. As the air-fuel ratio becomes rich, the NSR catalyst releases NOx so that this NOx is made harmless through a reaction with reducing agent components such as HC, CO and the like in the exhaust emission.

Generally, in a combustion process in the diesel engine, sulfur oxide (SOx) is also generated with a sulfur component included in fuel (light oil) and lubricating oil. This SOx is accumulated, as a chemically stable substance such as hydrosulfate, in a NOx storage material. Thus, as the accumulation amount is increased, NOx absorption performance is gradually degraded (so-called "sulfur poisoning", hereinafter also referred to as "S poisoning").

For this reason, when the SOx accumulation amount of the NOx storage material reaches a predetermined threshold value, control for recoveing the NOx absorption performance by releasing SOx (hereinafter also referred to as "S poisoning recovery control") is performed. As disclosed, for example, in Patent Documents 2 and 3 listed hereinafter, fuel is supplied to the exhaust system and a post-injection is executed in a state in which the air-fuel ratio is lean so that a catalyst floor temperature becomes higher than or equal to a predetermined value by an oxidation reaction heat. Then, the air-fuel ratio is enriched and the NSR catalyst is put to a reduction atmosphere. Thus, SOx is released from the NOx storage material so as to be reduced and purified.

### Prior Art Documents

### Patent Documents

[Patent Document 1] JP 2007-262992 A
[Patent Document 2] JP 2010-019092 A
[Patent Document 3] JP 2010-223076 A

JP H06 229231 A relates to an exhaust emission control device for an internal combustion engine.

EP 1 651 845 A1 relates to an exhaust gas control apparatus for an internal combustion engine.

JP 2003 035132 A relates to an exhaust emission control device for an internal combustion engine.

### Summary of Invention

### Problem to be Solved by Invention

In the case of releasing SOx from the NSR catalyst by enriching the air-fuel ratio in the above-described S poisoning recovery control, no suggestion has been made with regard to a release speed (release amount per unit time) of the sulfur component (sulfur component released as H₂S and SO₂) from the NSR catalyst per unit time or optimizing the air-fuel ratio in consideration of a fuel consumption rate when enriching the air-fuel ratio.

The inventors of the present invention made the present invention in consideration of compatibly achieving: to avoid degradation of exhaust emission due to the high release speed of H₂S and SO₂ and a remarkably worsening of malodor of the exhaust gas due to an increased ratio of an odorous gas contained in the exhaust gas; and to improve the fuel consumption rate when enriching the air-fuel ratio.

The present invention was made in consideration of the above, an object of which is to provide a control device for an internal combustion engine capable of optimizing the air-fuel ratio in the S poisoning recovery control.

### Means for Solving Problem

### -Principle of Solution of Invention-

A principle of a solution of the present invention provided in order to achieve the above-described object is that, in the S poisoning recovery control of the exhaust purification catalyst such as the NSR catalyst, the exhaust air-fuel ratio is changed according to a temperature of the catalyst after an amount of movement of the sulfur component in the catalyst reaches a predetermined amount. Thus, it is possible to avoid a condition in which the release speed of H₂S and SO₂ becomes high under a high temperature of the catalyst or a condition in which the fuel consumption rate cannot be sufficiently improved due to long duration of the S poisoning recovery control under a low temperature of the catalyst.

### -Solving Means-

Specifically, the present invention is premised on a control device for an internal combustion engine, the control device performing sulfur poisoning recovery control that reduces and purifies, by enriching an exhaust air-fuel ratio, a sulfur component accumulated in an exhaust purification catalyst provided in an exhaust system of the internal combustion engine so that the sulfur component is discharged. Here, the exhaust purification catalyst is an NOx storage/reduction catalyst that treats NOx by absorbing NOx in exhaust emission, and by reducing and releasing the absorbed NOx. In the control device for the internal combustion engine, after the sulfur poisoning recovery control is started, a strong rich control for setting the exhaust air-fuel ratio less than a predetermined value is performed until movement of the accumulated sulfur component is started in the exhaust purification catalyst. When the movement of the accumulated sulfur component is started in the exhaust purification catalyst, and at a time when an amount of the movement reaches a predetermined amount, either the strong rich control for setting the exhaust air-fuel ratio less than the predetermined value or a weak rich control for setting the exhaust air-fuel ratio more than or equal to the predetermined value is selected according to a temperature of the exhaust purification catalyst.

At the time when the amount of the movement of the accumulated sulfur component in the exhaust purification catalyst reaches the predetermined amount, the weak rich control is selected when the temperature of the exhaust purification catalyst exceeds a predetermined value while the strong rich control is selected when the temperature of the exhaust purification catalyst is less than or equal to the predetermined value.

In the sulfur poisoning recovery control, when the accumulated sulfur component in the exhaust purification catalyst desorbs from the exhaust purification catalyst due to enriching the exhaust air-fuel ratio, the sulfur component desorbed from the exhaust purification catalyst moves in the exhaust purification catalyst from the upstream side toward the downstream side in the direction of the flow of the exhaust emission. A desorption speed of the sulfur component from the exhaust purification catalyst (desoprtion amount of the sulfur component per unit time) becomes higher as the temperature of the exhaust purification catalyst is higher and the exhaust air-fuel ratio is lower (i.e., the rich degree is higher). Accordingly, when the temperature of the exhaust purification catalyst is high and furthermore the exhaust air-fuel ratio is low (strong rich), a discharge amount of the sulfur component (H₂S and SO₂) per unit time that is discharged from the exhaust purification catalyst is increased, which results in a condition in which degradation of the exhaust emission and worsening of malodor of the exhaust gas are concerned about. For this reason, in this solving means, when the movement of the accumulated sulfur component is started in the exhaust purification catalyst, and at the time when the amount of the movement reaches the predetermined amount (i.e., at the time when the sulfur component may begin to be discharged from the exhaust purification catalyst), the weak rich control is selected under a condition in which the temperature of the exhaust purification catalyst exceeds the predetermined value. Thus, the discharge amount of the sulfur component per unit time that is discharged from the exhaust purification catalyst is reduced, thereby the degradation of the exhaust emission and the worsening of malodor of the exhaust gas can be reduced.

On the other hand, when the temperature of the exhaust purification catalyst is less than or equal to the predetermined value, if the exhaust air-fuel ratio is high (weak rich), the time period required to discharge substantially the total amount of the accumulated sulfur component in the exhaust purification catalyst is increased. Thus, the rich state of the exhaust air-fuel ratio should be maintained during the above long time period, which results in the degradation of the fuel consumption rate. For this reason, in this solving means, when the movement of the accumulated sulfur component is started in the exhaust purification catalyst, and at the time when the amount of the movement reaches the predetermined amount, the strong rich control is selected under a condition in which the temperature of the exhaust purification catalyst is less than or equal to the predetermined value. Thus, the discharge of the sulfur component accumulated in the exhaust purification catalyst is promoted, thereby the time period required to discharge substantially the total amount of the sulfur component can be reduced and the fuel consumption rate can be improved.

Thus, in this solving means, at the time when the amount of the movement of the accumulated sulfur component in the exhaust purification catalyst reaches the predetermined amount, the exhaust air-fuel ratio is selected according to the temperature of the exhaust purification catalyst, thereby improving the exhaust emission, preventing the worsening of malodor of the exhaust gas, and improving the fuel consumption rate.

Also, after the sulfur poisoning recovery control is started, the strong rich control is performed until the movement of the accumulated sulfur component is started in the exhaust purification catalyst. Thus, after start of the sulfur poisoning recovery control, the sulfur component desorbs within relatively short time period, and the movement in the exhaust purification catalyst is started. Therefore, it is also possible to shorten the time period required for the sulfur poisoning recovery control.

More specifically, an operation to select either the strong rich control or the weak rich control according to the temperature of the exhaust purification catalyst is performed at the time when a position of the largest accumulation amount of the sulfur component reaches a center portion in the exhaust purification catalyst in the direction of the flow of the exhaust gas by the movement of the sulfur component in the exhaust purification catalyst.

At the time of starting the sulfur poisoning recovery control, the position of the largest accumulation amount of the sulfur component in the exhaust purification catalyst is an upstream end portion in the direction of the flow of the exhaust gas. Then, the sulfur poisoning recovery control is executed, and after the time when the position of the largest accumulation amount reaches the center portion from the upstream portion of the exhaust purification catalyst in the direction of the flow of the exhaust gas, the reduced and purified sulfur component (H₂S and SO₂) may be discharged from the exhaust purification catalyst. For this reason, at the above time, the exhaust air-fuel ratio is selected (i.e., the strong rich control or the weak rich control is selected) according to the temperature of the exhaust purification catalyst. Thus, even if the temperature of the exhaust purification catalyst exceeds the predetermined value, the weak rich control is selected so that the discharge amount of H₂S and SO₂ per unit time is reduced, thereby the degradation of the exhaust emission and the worsening of malodor of the exhaust gas can be reduced.

Operations to estimate the amount of the movement of the sulfur component in the exhaust purification catalyst include, in particular, the following.

The amount of the movement of the sulfur component in the exhaust purification catalyst is obtained based on a length of a period when the strong rich control is performed, and as the length of the period when the strong rich control is performed becomes longer, a larger amount of the movement of the sulfur component is obtained.

Also, the amount of the movement of the sulfur component in the exhaust purification catalyst is obtained based on the length of the period when the strong rich control is performed and the temperature of the exhaust purification catalyst, and as the length of the period when the strong rich control is performed becomes longer and the temperature of the exhaust purification catalyst becomes higher, a larger amount of the movement of the sulfur component is obtained.

Thus, it is possible to accurately obtain the amount of the movement of the sulfur component. Accordingly, the timing to select either the strong rich control or the weak rich control according to the temperature of the exhaust purification catalyst can be appropriately set.

In the weak rich control for making the exhaust air-fuel ratio more than or equal to the predetermined value, more specifically, the exhaust air-fuel ratio is adjusted as follows. That is, when the weak rich control is selected due to the temperature of the exhaust purification catalyst exceeding the predetermined value, the exhaust air-fuel ratio is set larger as the temperature of the exhaust purification catalyst becomes higher.

Also, in the strong rich control for making the exhaust air-fuel ratio less than the predetermined value, more specifically, the exhaust air-fuel ratio is adjusted as follows. That is, when the strong rich control is selected due to the temperature of the exhaust purification catalyst being less than or equal to the predetermined value, the exhaust air-fuel ratio is set smaller as the temperature of the exhaust purification catalyst becomes lower.

Thus, by adjusting the exhaust air-fuel ratio according to the temperature of the exhaust purification catalyst in the weak rich control and the strong rich control, it is possible to optimize the desorption speed of the sulfur component from the exhaust purification catalyst, and to optimize the fuel consumption rate.

### Effects of Invention

In the present invention, either the strong rich control for making the exhaust air-fuel ratio less than the predetermined value or the weak rich control for making the exhaust air-fuel ratio more than or equal to the predetermined value is selected according to the temperature of the exhaust purification catalyst. Thus, it is possible to improve the exhaust emission, prevent the worsening of the malodor of the exhaust gas, and improve the fuel consumption rate.

### Brief Description of Drawings

[FIG. 1] FIG. 1 is a diagram showing a schematic configuration of a diesel engine and a control system thereof according to an embodiment.
[FIG.2] FIG. 2 is a cross-sectional view showing a combustion chamber of the diesel engine and its surroundings.
[FIG.3] FIG. 3 is a block diagram showing a configuration of a control system such as an ECU.
[FIG.4] FIGS. 4(a) and 4(b) are diagrams indicating fuel injection control of an injector, where FIG. 4(a) shows an aspect of the fuel injection in a lean period in S poisoning recovery control, and FIG. 4(b) shows an aspect of the fuel injection in a rich period in S poisoning recovery control.
[FIG.5] FIG. 5 is a timing chart indicating basic operations of the S poisoning recovery control, specifically, showing one example of respective changes in an exhaust air-fuel ratio, a catalyst floor temperature, SOx release rate from an NSR catalyst, SOx remaining amount in the NSR catalyst.
[FIG.6] FIG. 6 is a diagram showing one example of an accumulation distribution of a sulfur component in the NSR catalyst at the time of starting the S poisoning recovery control.
[FIG.7] FIG. 7 is a diagram showing one example of change in the accumulation distribution of the sulfur component in the NSR catalyst after the S poisoning recovery control is started.
[FIG. 8] FIG. 8 is a flowchart showing an operation procedure in a rich period in the S poisoning recovery control.
[FIG. 9] FIG. 9 is a diagram showing one example of a relationship between the exhaust air-fuel ratio rich period and a movement distance of the sulfur component in the NSR catalyst.
[FIG. 10] FIG. 10 is a diagram showing one example of a relationship between the movement distance of the sulfur component in the NSR catalyst, and the exhaust air-fuel ratio rich period and the catalyst floor temperature.

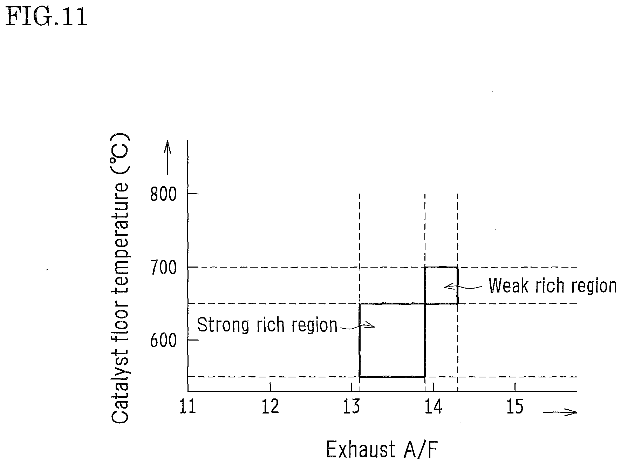

[FIG. 11] FIG. 11 is a diagram showing a relationship between the catalyst floor temperature after the sulfur component is moved and a target exhaust air-fuel ratio in the S poisoning recovery control. Modes for Carrying Out Invention

Hereinafter description will be given on an embodiment of the present invention with reference to the drawings. In this embodiment, a case will be described in which the present invention is applied to a common rail in-cylinder direct injection multi-cylinder (for example, inline four-cylinder) diesel engine (internal combustion engine) mounted on a vehicle.

### -Engine Configuration-

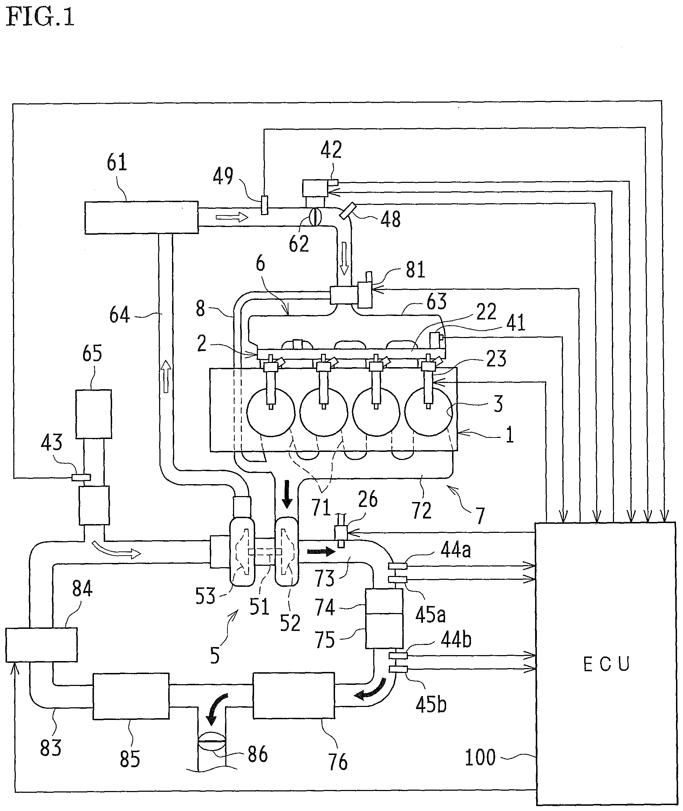

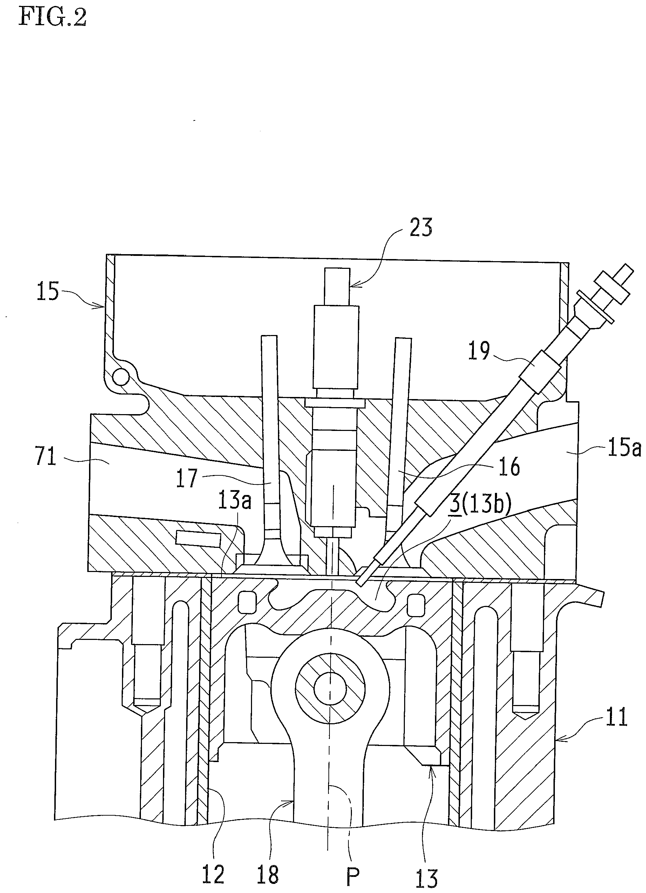

First, an overall configuration of a diesel engine (hereinafter referred to as simply the "engine") according to this embodiment will be described. FIG. 1 is a schematic configuration diagram of an engine 1 and a control system thereof according to this embodiment. Also, FIG. 2 is a cross-sectional view showing a combustion chamber 3 of the diesel engine 1 and its surroundings.

As shown in FIG. 1, the engine 1 according to this embodiment is configured as a diesel engine system including a fuel supply system 2, the combustion chamber 3, an intake system 6, an exhaust system 7, and the like as its main portions. Among them, the fuel supply system 2 is a so-called common rail system including a common rail 22 that is common to all cylinders and injectors (fuel injection valves) 23 for the respective cylinders.

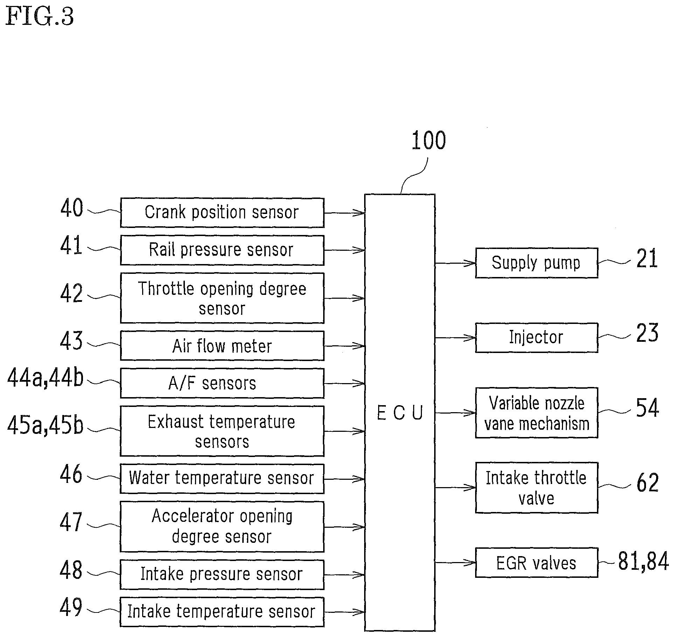

To the common rail 22, fuel that is drawn from a fuel tank (not shown) and pressurized by a supply pump 21 (see FIG. 3) is supplied. The common rail 22 has a functionality of an accumulation chamber in which the high pressure fuel is held (accumulated) at a predetermined pressure, and this accumulated fuel is distributed to the respective injectors 23 (in FIG. 1, the reference numeral is provided on the one on the extreme right). The injector 23 is configured from a piezo injector within which a piezoelectric element (piezo element) is provided. The piezo injector supplies fuel by injection into the combustion chamber 3 by appropriately opening a valve.

Also, the supply pump 21 supplies part of the fuel drawn from the fuel tank to a fuel addition valve 26. The fuel addition valve 26 is configured from an electronically controlled on-off valve that adds the fuel to the exhaust system 7, as necessary, by an addition control operation of an ECU 100.

The intake system 6 includes an intake manifold 63 connected to an intake port 15a formed in a cylinder head 15 (see FIG. 2). An intake pipe 64 is connected to the intake manifold 63 so as to constitute an intake path. In the intake path, an air cleaner 65, an air flow meter 43, an intake throttle valve (diesel throttle) 62 are disposed in this order from the upstream side of the intake flow. The air flow meter 43 outputs an electrical signal according to the amount of air that flows into the intake path via the air cleaner 65.

The exhaust system 7 includes an exhaust manifold 72 connected to an exhaust port 71 formed in the cylinder head 15. An exhaust pipe 73 is connected to the exhaust manifold 72 so as to constitute an exhaust path. The exhaust path includes, as one example, an oxidation catalyst 74, an NSR (NOx storage reduction) catalyst 75 that is an NOx storage/reduction exhaust purification catalyst and a DPF (diesel particulate filter) 76. A DPNR (diesel particulate-NOx reduction system) catalyst may be used instead of the NSR catalyst 75 and the DPF 76.

The NSR catalyst 75 absorbs NOx when a large amount of oxygen exists in the exhaust emission, and reduces NOx to NO₂ or NO so as to release it when the oxygen concentration of the exhaust emission is low and furthermore a large amount of a reduction component (e.g., an unburned fuel component (HC)) exists in the exhaust emission. The NOx that was released as NO₂ or NO quickly reacts with HC or CO in the exhaust emission so as to be further reduced to N₂. Also, by reducing NO₂ or NO, HC and CO are themselves oxidized into H₂O and CO₂. That is, HC, CO and NOx in the exhaust emission can be purified by appropriately adjusting the oxygen concentration and an HC component in the exhaust emission introduced to the NSR catalyst 75. In this embodiment, the adjustment of the oxygen concentration and the HC component in the exhaust emission is performed through an operation of injecting fuel from the injectors 23 (after-injection and post-injection) and control of an opening degree of the intake throttle valve 62.

The DPF 76 is, for example, constituted by a porous ceramic structure. When exhaust gas passes through porous walls, PM (particulate matters) contained in the exhaust gas are trapped. The DPF 76 carries a catalyst that oxidizes/burns the trapped PM (e.g., an oxidation catalyst whose main component is a rare metal such as platinum) when a DPF regeneration operation is performed.

Here, description will be given on the configuration of the combustion chamber 3 of the engine 1 and its surroundings with reference to FIG. 2. As shown in FIG. 2, in a cylinder block 11 that constitutes part of the engine main body, a cylindrical cylinder bore 12 is formed in each cylinder (each of four cylinders in the example shown in FIG. 2). A piston 13 is housed within each cylinder bore 12 so that the piston 13 can slide vertically.

The combustion chamber 3 is formed on an upper side of a top face 13a of the piston 13. That is, the combustion chamber 3 is defined by a lower face of the cylinder head 15 mounted on top of the cylinder block 11, an inner wall face of the cylinder bore 12 and the top face 13a of the piston 13. In the substantial center of the top face 13a of the piston 13, a cavity (recess portion) 13b is provided, which also constitutes part of the combustion chamber 3.

The piston 13 is coupled to a crankshaft serving as an engine output shaft by a connecting rod 18. Thus, back and forth movement of the piston 13 in the cylinder bore 12 is transmitted to the crankshaft via the connecting rod 18. Engine output can be obtained by rotation of the crankshaft.

A glow plug 19 is disposed toward the combustion chamber 3. The glow plug 19 glows due to a flow of an electrical current immediately before the engine 1 is started. The glow plug 19 functions as a starting assistance device by which ignition and combustion is promoted due to part of fuel spray being blown onto the glow plug.

In the cylinder head 15, the intake port 15a and the exhaust port 71 are formed, and furthermore, an intake valve 16 that opens/closes the intake port 15a and an exhaust valve 17 that opens/closes the exhaust port 71 are disposed. Furthermore, in the cylinder head 15, the injector 23 is provided, which injects fuel directly into the combustion chamber 3. The injector 23 is disposed substantially in the center above the combustion chamber 3, in a standing manner along the cylinder centerline P. The injector 23 injects fuel introduced from the common rail 22 toward the combustion chamber 3 at a predetermined timing.

Furthermore, as shown in FIG. 1, the engine 1 includes a turbocharger 5. The turbocharger 5 includes a turbine wheel 52 and a compressor wheel 53 that are coupled to each other by a turbine shaft 51. The compressor wheel 53 is disposed in the intake pipe 64. The turbine wheel 52 is disposed in the exhaust pipe 73. The turbocharger 5 uses an exhaust flow (exhaust pressure) received by the turbine wheel 52 to rotate the compressor wheel 53 and thereby to increase an intake pressure. Thus, the turbocharger 5 performs a so-called supercharging operation.

An intercooler 61 is disposed in the intake pipe 64 downstream of the intake flow relative to the turbocharger 5 (compressor wheel 53). The intercooler 61 is for forcibly cooling intake air heated due to supercharging with the turbocharger 5. In this embodiment, the turbocharger 5 is a variable nozzle-type turbocharger, in which a variable nozzle vane mechanism 54 (see FIG. 3) is provided on the side of the turbine wheel 52. By adjusting an opening degree of the variable nozzle vane mechanism 54, a supercharging pressure of the engine 1 can be adjusted.

Also, the engine 1 includes an exhaust gas recirculation path (EGR path) 8 to connect the intake system 6 and the exhaust system 7. The EGR path 8 is branched from the vicinity of a gathering part of the exhaust manifold 72 (exhaust path upstream of the exhaust flow relative to the NSR catalyst 75: upstream side exhaust path) to take out part of the high-pressure exhaust emission and recirculate it to the vicinity of a connecting part of the intake manifold 63 and the intake pipe 64 (intake path downstream of the intake throttle valve 62). Hereinafter, the EGR path 8 is referred to as a high-pressure EGR path 8. Also, the high-pressure EGR path 8 is provided an EGR valve 81 that is opened/closed steplessly under electronic control and that can adjust freely the amount of the exhaust emission flowing through the high-pressure EGR path 8.

Furthermore, the engine 1 includes, apart from the high-pressure EGR path 8, a low-pressure EGR path 83 that is branched from the exhaust path downstream of the DPF 76 to take out part of the relatively low-pressure exhaust emission and recirculate it to the intake path upstream of the turbocharger 5 (compressor wheel 53). With the low-pressure EGR path 83, a large amount of the exhaust emission can be recirculated to the intake system with a lower pressure. Similarly to the high-pressure EGR path 8, an EGR valve 84 is provided in the low-pressure EGR path 83. Also, an EGR cooler 85 to cool the recirculated exhaust gas is provided in the low-pressure EGR path 83. Note that the reference numeral 86 in FIG. 1 represents an exhaust throttle valve, an opening degree of which is decreased at the time of recircurating the exhaust emission to the low-pressure EGR path 83.

### -Sensors-

Various sensors are mounted on respective sites of the engine 1. These sensors output signals related to environmental conditions at the respective sites and an operating condition of the engine 1.

For example, the air flow meter 43 outputs a detection signal according to the flow amount of intake air (intake air amount) on the upstream side of the intake throttle valve 62 in the intake system 6. A rail pressure sensor 41 outputs a detection signal according to a pressure of the fuel stored in the common rail 22. A throttle opening degree sensor 42 detects the opening degree of the intake throttle valve 62. An intake pressure sensor 48 is disposed on the downstream side of the intake throttle valve 62, and outputs a detection signal according to the intake pressure. An intake temperature sensor 49 is disposed on the downstream side of the intercooler 61 and outputs a detection signal according to a temperature of intake air.

A/F (air-fuel ratio) sensors 44a and 44b are disposed, respectively, on the upstream side of the oxidation catalyst 74 and on the downstream side of the NSR catalyst 75, and output detection signals that change in a continuous manner according to an oxigen concentration in the exhaust gas. Note that the A/F sensors may be disposed only on the upstream side of the oxidation catalyst 74, or may be on the upstream side of the NSR catalyst 75, or may be only on the downstream side of the NSR catalyst 75.

Likewise, exhaust temperature sensors 45a and 45b are disposed, respectively, on the upstream side of the oxidation catalyst 74 and on the downstream side of the NSR catalyst 75, and output detection signals according to the temperature of the exhaust gas (exhaust temperature). Note that the exhaust temperature sensors may be disposed only on the upstream side of the oxidation catalyst 74, or may be on the upstream side of the NSR catalyst 75, or may be only on the downstream side of the NSR catalyst 75.

### -ECU-

An ECU 100 includes: a microcomputer configured by a CPU, a ROM, a RAM, and the like (not shown); and input/output circuits. As shown in FIG. 3, the input circuit of the ECU 100 is connected to the rail pressure sensor 41, the throttle opening degree sensor 42, the air flow meter 43, the A/F sensors 44a and 44b, the exhaust temperature sensors 45a and 45b, the intake pressure sensor 48 and the intake temperature sensor 49. Furthermore, the input circuit is connected, for example, to a water temperature sensor 46 that outputs a detection signal according to a coolant temperature of the engine 1, an accelerator opening degree sensor 47 that outputs a detection signal according to an accelerator pedal stepping amount, and a crank position sensor 40 that outputs a detection signal (pulse) each time the output shaft (crankshaft) of the engine 1 rotates by a specific angle.

On the other hand, the output circuit of the ECU 100 is connected to the supply pump 21, the injector 23, the intake throttle valve 62, the EGR valves 81 and 84, and the variable nozzle vane mechanism (actuator that adjusts the opening degree of the variable nozzle vane) 54 of the turbocharger 5.

The ECU 100 executes various control of the engine 1 by referring to outputs from the various sensors and maps stored, as necessary, in the ROM, based on computing values obtained from an arithmetic expression employing the output values. For example, the ECU 100 executes various control of engine 1 that includes fuel injection control (control of an injection amount and an injection timing) by the injector 23, control of the opening degree of the intake throttle valve 62 (throttle opening degree) and control of opening degrees of the EGR valves 81 and 84.

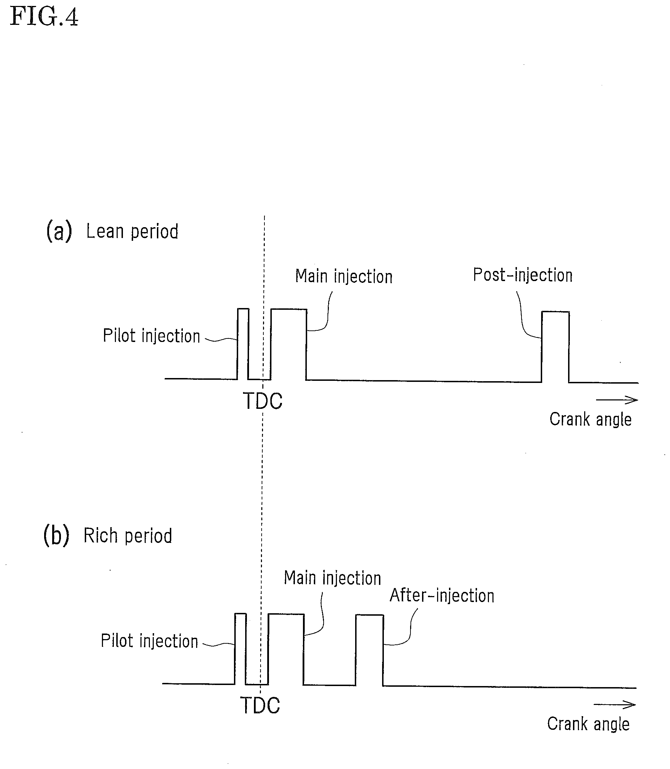

For example, as the fuel injection control of the injector 23, an after-injection and a post-injection are executed, as necessary, apart from a pilot injection or a main injection (fuel injection mainly contributes to torque generation in the engine 1), as shown in FIG. 4 (waveforms indicating fuel injection instruction signals to the injector 23). As known, the pilot injection is to burn a small amount of fuel injected prior to the main injection. Thus, it suppresses ignition delay of fuel subsequently and mainly injected and leads to stable diffusion combustion.

Generally, the main injection is an injection operation to generate torque in the engine 1. An injection amount in the main injection is basically determined so as to obtain a required torque according to, for example, operation conditions such as the engine rotational speed (engine rotational number), the accelerator operation amount, the coolant temperature, and the intake air temperature. For example, the greater the engine rotational speed (engine rotational speed calculated based on the detection value from the crank position sensor 40; engine rotational number) is, or, the greater the accelerator opening degree (accelerator pedal stepping amount detected by the accelerator opening degree sensor 47) is, the greater the required torque to the engine 1 is. Accordingly, the main injection amount is set large.

As one example of a specific fuel injection form, the pilot injection (fuel injection from a plurality of injection holes formed in the injector 23) is executed before each compression top dead center of the corresponding cylinder. Then the fuel injection is suspended, and after a predetermined interval, the main injection is executed in the vicinity of the compression top dead center. Thus, fuel burns due to self ignition, and energy generated by this combustion becomes kinetic energy to push the piston 13 down toward a bottom dead center (energy serving as engine output), thermal energy to increase the temperature in the combustion chamber 3, and thermal energy to be dissipated to the outside (e.g., coolant) via the cylinder block 11 and the cylinder head 15.

A fuel injection pressure when executing the fuel injection is determined by an internal pressure of the common rail 22. With regard to the internal pressure of the common rail, generally, the higher an engine load (combustion engine load) becomes, and furthermore the higher the engine rotational speed (combustion engine rotational speed) becomes, the greater a target value for the fuel pressure supplied to the injector 23 from the common rail 22 (i.e., target rail pressure) becomes. The target rail pressure is set according to, for example, a fuel pressure setting map stored in the ROM.

The after-injection and the post-injection are used for adjusting the exhaust air-fuel ratio (exhaust A/F) and increasing the temperature of the NSR catalyst 75 or the DPF 76 in NOx reduction control and S poisoning recovery control, which will be described later.

Furthermore, the ECU 100 controls the respective opening degrees of the intake throttle valve 62 and the EGR valves 81 and 84 according to the operating condition of the engine 1 so as to adjust the intake air (new charged air) amount and the recirculation amount of the exhaust emission (EGR gas amount). This control is executed based on an intake air amount map and an EGR map that are obtained in advance by experiments and simulations and the like and stored in the ROM. As one example, the opening degree of the intake throttle valve 62 is increased and the opening degrees of the EGR valves 81 and 84 are decreased as the required torque to the engine 1 and the engine rotational speed are increased.

Also, in this embodiment, when the exhaust air-fuel ratio (exhaust A/F) is shifted to a rich side or a lean side in the S poisoning recovery control, the intake air (new charged air) amount is decreased by decreasing the opening degree of the intake throttle valve 62 and by appropriately recirculating the EGR gas on the rich side (in the rich period). On the other hand, the opening degree of the intake throttle valve 62 is increased to increase the intake air amount while the EGR gas is not recirculated on the lean side (in the lean period). The operations to shift the exhaust A/F to the rich side or the lean side are not limited thereto.

### -Control Operation of Control Device for Internal Combustion Engine-

Hereinafter, description will be given, respectively, on the NOx reduction control and S poisoning recovery control by the control device for the internal combustion engine of this embodiment. After the NOx reduction control is simply described, the S poisoning recovery control that is the characteristic of this embodiment is described for details.

### (NOx reduction control)

Generally, in the diesel engine 1, the exhaust air-fuel ratio is a lean air-fuel ratio in a large portion of the total operation region, and during the normal operating condition, the ambient atmosphere of the NSR catalyst 75 is in a high oxigen concentration state, thus NOx in the exhaust emission is absorbed by the NSR catalyst 75. Since the ambient atmosphere of the NSR catalyst 75 is rarely in a low oxigen concentration state, as the NOx absorption amount is gradually increased, the NOx absorption performance of the NSR catalyst 75 is degraded.

In consideration of the foregoing, when the NOx absorption amount estimated based on the engine operating condition and the like reaches a predetermined threshold value (an appropriate value before the NOx absorption performance of the NSR catalyst 75 is saturated), the post-injection is executed by the injector 23 to supply fuel in the exhaust emission. Thus, the air-fuel ratio (exhaust A/F) is temporarily enriched thereby increasing an amount of reducing agent components (such as HC). Therefore, the circumference of the NSR catalyst 75 becomes a reduction atmosphere and the stored NOx is released so as to be reduced and purified. In this way, the NOx absorption performance of the NSR catalyst 75 is recovered.

One example of methods for estimating the NOx absorption amount is a method in which the NOx absorption amount according to the engine rotational speed and the fuel injection amount by the injector 23 is obtained in advance by experiments and simulations to make a map, and the NOx absorption amount obtained from the map is integrated. Another example is a method in which the NOx absorption amount is estimated based on a vehicle travel distance after termination of the previous NOx reduction control or a total fuel injection amount.

### (S poisoning recovery control)

Next, the S poisoning recovery control that is the characteristic of this embodiment is described. In the above-described NOx reduction control, the exhaust air-fuel ratio that flows into the NSR catalyst 75 is instantaneously enriched so that the stored NOx can be released. However, in the NSR catalyst 75, sulfur component (SOx) absorption occurs due to a mechanism similar to that in which NOx is absorbed. SOx once absorbed desorbs less readily than NOx. Thus, even if the NOx reduction control is executed, SOx accumulates gradually in the NSR catalyst 75 instead of desorbing.

For details, the mechanism of the S poisoning is as described below. When fuel and lubricant oil burn in the combustion chamber 3 of the engine 1, SOx such as sulfur dioxide (SO₂) and sulfur trioxide (SO₃) is produced. When the oxigen concentration of the exhaust emission flowing into the NSR catalyst 75 is high, SOx such as SO₂ and SO₃ in the inflowing exhaust emission is oxidized on a surface of platinum (Pt) and absorbed by the NSR catalyst 75, for example in the form of sulfate ions.

Then, the sulfate ions absorbed by the NSR catalyst 75 bond with barium oxide (BaO) so as to form hydrosulfate (BaSO₄), which is more stable and decomposes less readily than barium nitrate (Ba(NO₃)₂). For this reason, even if the oxygen concentration of the exhaust emission flowing into the NSR catalyst 75 becomes low by the NOx reduction control and the like, the hydrosulfate remains in the NSR catalyst 75 without decomposition and accumulates with time.

As the amount of hydrosulfate (BaSO₄) accumulated in the NSR catalyst 75 is increased, the amount of barium oxide (BaO) that can contribute to absorption of NOx is decreased. Thus, the NOx absorption performance of the NSR catalyst 75 is degraded, which results in decrease of an NOx purification rate (S poisoning). The amount of SOx accumulated in the NSR catalyst 75 is measured based on the total fuel injection amount by the injector 23 after termination of the previous S poisoning recovery control and a sulfur concentration in the fuel.

One example of methods for eliminating the above-described S poisoning is a method in which the ambient temperature of the NSR catalyst 75 is increased to a high temperature range of substantially 600°C to 700°C (or 550°C to 700°C) and the oxygen concentration of the exhaust emission flowing into the NSR catalyst 75 is reduced (the exhaust air-fuel ratio is enriched). Thus, the barium sulfate (BaSO₄) absorbed by the NSR catalyst 75 thermally decomposes to react with hydrocarbon (HC) and carbon monoxide (CO) in the exhaust emission, and then reduced to gaseous SO₂.

In this embodiment, the S poisoning is eliminated by executing the above-described after-injection and post-injection and by controlling the opening degrees of the intake throttle valve 62 and the EGR valves 81 and 84 so that the exhaust air-fuel ratio is shifted to the rich side or the lean side. Specifically, in the lean exhaust emission, the post-injected fuel is oxidized by the NSR catalyst 75, and its reaction heat effectively increases the floor temperature of the NSR catalyst 75. After that, the air-fuel ratio is shifted to the rich side to supply the reducing agent components to the NSR catalyst 75.

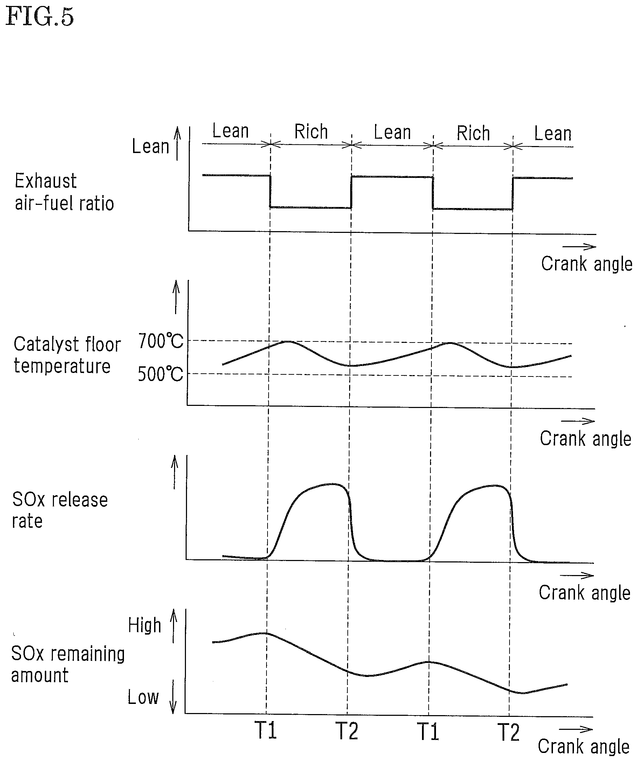

Hereinafter, description will be given for details on the operations of the S poisoning recovery control with reference to FIG. 5 in addition to the above-referenced FIG. 4. FIG. 5 is a timing chart during the S poisoning recovery control that shows one example of respective changes in the exhaust air-fuel ratio, the catalyst floor temperature, the SOx release rate from the NSR catalyst 75 (SOx release amount per unit rotation angle of the crankshaft) and the SOx remaining amount in the NSR catalyst 75.

In the S poisoning recovery control, the lean period in which the exhaust air-fuel ratio is set lean and the rich period in which the exhaust air-fuel ratio is set rich are alternately appeared. In the lean period, the floor temperature of the NSR catalyst 75 is increased to a temperature at which SOx can desorb (temperature at which barium sulfate (BaSO₄) can thermally decompose). On the other hand, in the rich period, SOx desorbs from the NSR catalyst 75 with the exhaust air-fuel ratio being enriched, thus SOx is reacted with hydrocarbon (HC) and carbon monoxide (CO) in the exhaust emission so as to be reduced and purified.

As one example, the shift timing from the lean period to the rich period is a time point when the floor temperature of the NSR catalyst 75 reaches a temperature sufficient to cause desorption of SOx (e.g., 680°C). On the other hand, the shift timing from the rich period to the lean period is a time point when the floor temperature of the NSR catalyst 75 is decreased to a predetermined temperature (e.g., 550°C). In this way, the lean period and the rich period are shifted and repeated alternately, thereby SOx desorbs from the NSR catalyst 75. Note that the respective temperatures are not limited thereto. They may be appropriately set.

More specific description is given with reference to FIG. 4. When the S poisoning amount (amount of SOx accumulated) reaches a predetermined value and the S poisoning recovery control is started, the post-injection is executed as shown in FIG. 4(a) in the lean period of the air-fuel ratio, after execution of the main injection and at the latter half of the expansion stroke of the cylinder (e.g., ATDC 100° CA-130° CA), so that the catalyst floor temperature is increased. In this post-injection, the fuel does not burn in the combustion chamber 3 and thermally decomposes under the high temperature to flow the exhaust path. Thus, the fuel is oxidized while passing through the NSR catalyst 75 so that the catalyst floor temperature is effectively increased.

When the floor temperature of the NSR catalyst 75 is increased and reaches a predetermined temperature (e.g., 680°C), the lean period is shifted to the rich period (at the timing T1 in FIG. 5). As shown in FIG. 4(b), in the rich period, the fuel is after-injected at the timing when the fuel burns in the cylinder after the main injection (e.g., ATDC 30° CA-60° CA), and thus the total amount of fuel injected by the after-injection, the pilot injection and the main injection is increased.

At the same time, the opening degree of the intake throttle valve 62 is decreased to a predetermined opening degree, thereby the intake air (new charged air) amount is decreased. Thus, the air-fuel ratio can be richer (e.g., the A/F is less than or equal to 14.3) than the theoretical air-fuel ratio in conjunction with the increase of the total fuel injection amount. Accordingly, the exhaust air-fuel ratio is also richer than the theoretical air-fuel ratio. Exhaust air-fuel ratio control in the rich period will be described later for details.

Increase of the torque by burning the fuel after-injected is compensated by decrease of the opening degree of the intake throttle valve 62. In other words, in order to not generate torque fluctuation, the amount and the timing of the after-injection and the opening degree of the intake throttle valve 62 are coordinated with each other to be appropriately set in advance by experiments and simulations so as to be stored by the ROM of the ECU 100 as a map.

In the rich period, the exhaust air-fuel ratio becomes rich while the floor temperature of the NSR catalyst 75 is increased sufficiently (increased to the temperature at which desorption of SOx is possible), therefore SOx desorbs from the catalyst 75. That is, as shown in the graph of the SOx release rate in FIG. 5, SOx is released from the NSR catalyst 75, thus the SOx remaining amount in the NSR catalyst 75 is gradually decreased. At the same time, the floor temperature of the NSR catalyst 75 is gradually decreased in the rich period, and when the floor temperature reaches the predetermined temperature (e.g., 550°C at which SOx cannot be released even if the exhaust A/F is shifted to strong rich described later), the rich period is shifted to the lean period (at the timing T2).

In this way, while the floor temperature of the NSR catalyst 75 is maintained in the high temperature range from 550°C to 700°C, the exhaust air-fuel ratio is shifted between rich and lean according to the change of the floor temperature. Thus, SOx is gradually released from the NSR catalyst 75, and the SOx accumulation amount in the NSR catalyst 75 (SOx remaining amount) is decreased. When the SOx accumulation amount falls below a predetermined amount, the S poisoning recovery control is terminated.

The SOx release amount from the NSR catalyst 75 is measured based on the floor temperature of the NSR catalyst 75 and the rich period. Specifically, as the floor temperature of the NSR catalyst 75 becomes high and as the rich period becomes long, the SOx release amount is increased. Thus, by measuring the floor temperature of the NSR catalyst 75 and the rich period, the SOx release amount can be obtained. Then, when the SOx release amount substantially matches the SOx absorbing amount at the time of starting the S poisoning recovery control (SOx absorbing amount measured based on the total fuel injection amount by the injector 23 and the sulfur concentration in the fuel), it is determined that substantially the total SOx amount in the NSR catalyst 75 was released, and the S poisoning recovery control is terminated.

The basic operations of the S poisoning recovery control are as described above.

### (Air-Fuel Ratio Control in Rich Period in S Poisoning Recovery Control)

This embodiment is characterized in the air-fuel ratio control in the rich period. Hereinafter description will be given on the summary of the air-fuel ratio control in the rich period.

When the rich period is started, a rich degree of the exhaust air-fuel ratio is set high by setting the amount of the after-injection large ("strong rich control" in the present invention at the time of starting the sulfur poisoning recovery control). The rich degree of the exhaust air-fuel ratio may be set high by concomitantly using: setting the amount of the after-injection large; and setting the opening degree of the intake throttle valve 62 small. Here, the exhaust air-fuel ratio (target exhaust air-fuel ratio) is set less than or equal to 13.9, for example, set to the value of 13.5. This value is not limited thereto. Hereinafter, the air-fuel ratio (including the exhaust air-fuel ratio) with the high rich degree (i.e. the exhaust air-fuel ratio is less than or equal to 13.9) is referred to as a "strong rich". The lower limit value of the exhaust air-fuel ratio in the range of the strong rich is, for example, 13.1. This value also is not limited thereto. On the other hand, the air-fuel ratio higher than the exhaust air-fuel ratio in the range of the strong rich (air-fuel ratio on the lean side), which is on the side richer than the theoretical air-fuel ratio (e.g., the exhaust air-fuel ratio is in the range from 13.9 to 14.3 (more than 13.9 and less than or equal to 14.3)), is hereinafter referred to as a "weak rich". The respective ranges of the exhaust air-fuel ratio in the strong rich and the weak rich are not limited thereto. They may be appropriately set.

In this way, the exhaust air-fuel ratio is made to be the strong rich at the time of starting the rich period, thus the desorption of SOx from the NSR catalyst 75 is promoted. This contributes to an early termination of the S poisoning recovery control. In this case, the exhaust air-fuel ratio is set to the strong rich regardless of the temperature of the NSR catalyst 75 (catalyst floor temperature).

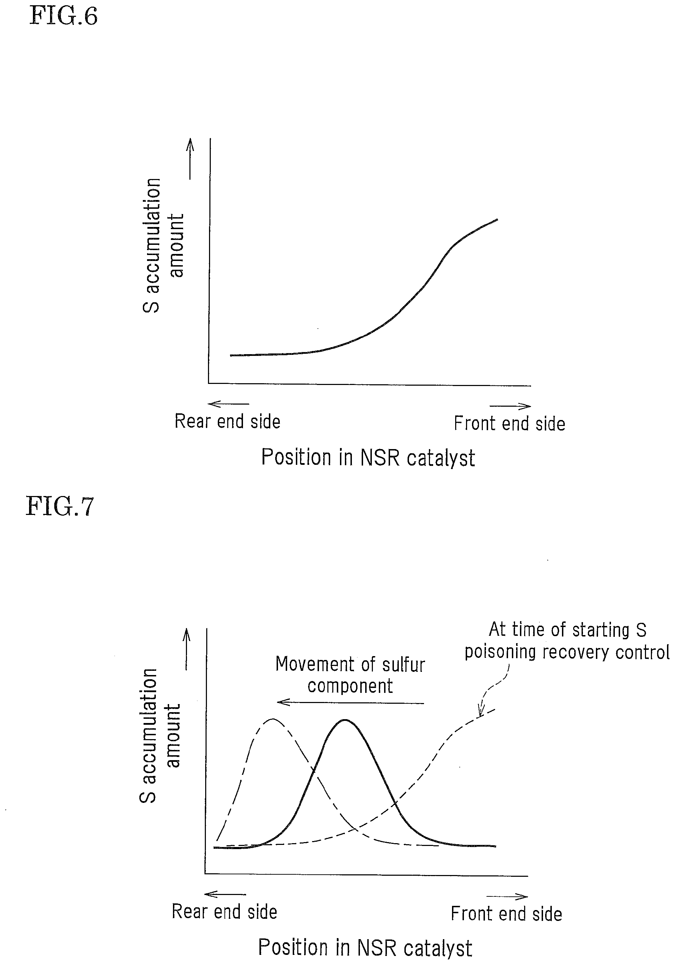

With respect to an accumulation distribution of SOx in the NSR catalyst 75 at the time of starting the S poisoning recovery control, the accumulation amount is the largest at the front end portion of the NSR catalyst 75 (upstream end portion in the direction of the flow of the exhaust gas), and is gradually decreased toward the rear end portion (downstream end portion in the direction of the flow of the exhaust gas). That is, the front end portion of the NSR catalyst 75 is the region in which the SOx accumulation amount in the NSR catalyst 75 is the largest (hereinafter also referred to as an "accumulation amount peak position"). FIG. 6 is a diagram showing one example of the accumulation distribution of the sulfur component (SOx) in the NSR catalyst 75 at the time of starting the S poisoning recovery control. As can be seen from the above, with respect to the accumulation distribution of SOx in the NSR catalyst 75, the accumulation amount is the largest at the front end portion of the NSR catalyst 75, and is gradually decreased toward the rear end portion.

Then, when the S poisoning recovery control is started and the rich period is maintained, SOx accumulated in the storing material of the NSR catalyst 75 desorbs and flows toward the rear end portion of the NSR catalyst 75. Thus, the accumulation amount peak position in the NSR catalyst 75 is gradually moved from the front end portion toward the rear end portion of the NSR catalyst 75.

FIG. 7 shows one example of change in the accumulation distribution of the sulfur component in the NSR catalyst after the S poisoning recovery control is started. The accumulation amount peak position in the NSR catalyst 75 is at the front end portion of the NSR catalyst 75 at the time of starting the S poisoning recovery control (see the broken line in the graph). In contrast, after the S poisoning recovery control is started, SOx desorbs from the storing material of the NSR catalyst 75 and the sulfur component flows toward the rear end portion of the NSR catalyst 75. Thus, as indicated by the solid line in the graph, the accumulation amount peak position reaches the center position of the NSR catalyst 75 in the longitudinal direction thereof (in the direction of the flow of the exhaust gas). Note that in such a state part of the sulfur component that once desorbed from the storing material of the NSR catalyst 75 is re-adhered to the storing material.

During continuation of the S poisoning recovery control, the sulfur component further flows toward the rear end portion of the NSR catalyst 75. Thus, as indicated by the dashed-dotted line in the graph, the accumulation amount peak position reaches near the rear end portion of the NSR catalyst 75, and after that, the sulfur component is discharged from the NSR catalyst 75 with the reduced state (i.e., as H₂S and SO₂).

In this way, in the case of continuation of the S poisoning recovery control, H₂S and SO₂ are not yet discharged from the NSR catalyst 75 or the discharge amount thereof is slight at the time when the accumulation amount peak position reaches the center position of the NSR catalyst 75 in the longitudinal direction thereof. On the other hand, discharge of H₂S and SO₂ from NSR catalyst 75 is started at the time when the accumulation amount peak position reaches near the rear end portion of the NSR catalyst 75 in the longitudinal direction thereof. The discharge amount (discharge speed) of H₂S and SO₂ per unit time is affected by the catalyst floor temperature and the exhaust A/F. Specifically, the higher the catalyst floor temperature is and the smaller (the richer) the exhaust A/F is, the higher the discharge speed of H₂S and SO₂ is.

In view of the above, in this embodiment, the exhaust air-fuel ratio control is started according to the temperature (floor temperature) of the NSR catalyst 75 at the time when the accumulation amount peak position (the highest position of the SOx accumulation distribution) is moved to a predetermined position (e.g., center position of the NSR catalyst 75 in the longitudinal direction thereof (in the direction of the flow of the exhaust gas)). In the exhaust air-fuel ratio control, the rich degree of the exhaust air-fuel ratio is made low as the temperature of the NSR catalyst 75 becomes high. Specifically, when the temperature of the NSR catalyst 75 exceeds a predetermined value (e.g., 650°C), the exhaust air-fuel ratio is set to the weak rich ("weak rich control" in the present invention). Thus, the discharge speed of H₂S and SO₂ from the NSR catalyst 75 is appropriately set (preventing the discharge speed from being extremely high). Also, when the temperature of the NSR catalyst 75 is less than or equal to the predetermined value (e.g., 650°C), the exhaust air-fuel ratio is set to the strong rich ("strong rich control" in the present invention). Thus, the discharge speed of the sulfur component from the NSR catalyst 75 is prevented from being extremely low, thereby avoiding degradation of the fuel consumption rate accompanied with the long duration of the rich period.

The temperature (catalyst floor temperature) of the NSR catalyst 75 is estimated based on the operating condition of the engine 1, the temperature of the exhaust gas detected by the exhaust temperature sensors 45a and 45b, and the like. Also, the temperature of the NSR catalyst 75 may be directly measured using sensors.

Also, in the case of the temperature of the NSR catalyst 75 being less than or equal to the predetermined value, when the exhaust air-fuel ratio is set to the strong rich, the strong rich degree of the exhaust air-fuel ratio may be increased (i.e., the exhaust air-fuel ratio is decreased) as the temperature of the NSR catalyst 75 is decreased (as the temperature of the NSR catalyst 75 is low in the range of the temperature higher than the temperature (e.g., 550°C) at which SOx cannot be released even if the exhaust A/F is set to the strong rich). In the case of the temperature of the NSR catalyst 75 exceeding the predetermined temperature, when the exhaust air-fuel ratio is set to the weak rich, the weak rich degree of the exhaust air-fuel ratio may be increased (i.e., the exhaust air-fuel ratio is increased) as the temperature of the NSR catalyst 75 is increased.

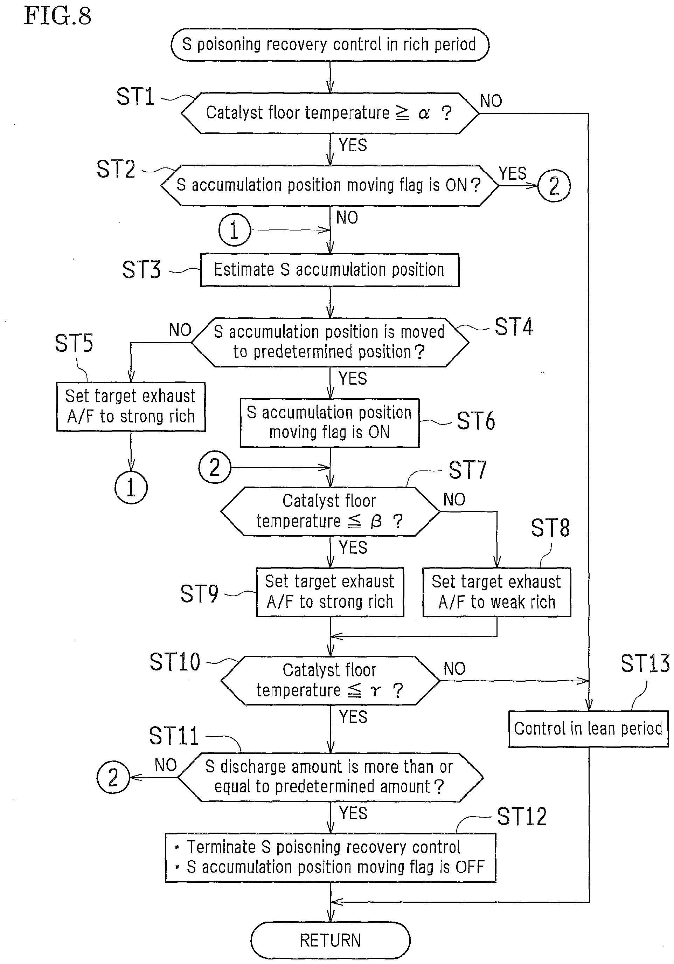

Hereinafter, a control procedure in the rich period in the S poisoning recovery control of this embodiment is described with reference to the flowchart of FIG. 8. The processing of this flowchart is executed at a predetermined interval (e.g., every several msec or every predetermined rotational angle of the crankshaft) after the S poisoning recovery control is started.

In step ST1, it is determined whether the floor temperature (catalyst floor temperature) of the NSR catalyst 75 is more than or equal to a predetermined value a. This predetermined value α is a value that defines the timing to shift from the lean period to the rich period, that is, a value at which the sulfur component can be successfully released from the NSR catalyst 75 when the exhaust air-fuel ratio is enriched, which is set, for example, to 680°C as described above. This value is not limited thereto. It may be appropriately set.

If the catalyst floor temperature is less than the predetermined value a, it is determined that the catalyst floor temperature does not yet reach the temperature to shift to the rich period, thus it is determined "NO" in step ST1. The procedure advances to step ST13, in which lean period control is executed. That is, by executing the post-injection after the main injection, control for effectively increasing the catalyst floor temperature is performed (see the aspect of the fuel injection indicated in FIG. 4(a)).

In contrast, if the catalyst floor temperature is more than or equal to the predetermined value α and it is determined "YES" in step ST1, the procedure advances to step ST2, in which it is determined whether an S accumulation position moving flag stored in advance in the ECU 100 is ON. This S accumulation position moving flag is turned to ON at the timing when the accumulation amount peak position (the highest position of the SOx accumulation distribution) is moved to the center position of the NSR catalyst 75 in the longitudinal direction thereof (in the direction of the flow of the exhaust gas) according to the execution of the S poisoning recovery control. The S accumulation position moving flag is turned to OFF when the S poisoning recovery control is terminated (i.e., it is determined that substantially the total SOx amount in the NSR catalyst 75 was released and thus the S poisoning recovery control is terminated). At the time of starting the S poisoning recovery control, the accumulation amount peak position is at the front end portion of the NSR catalyst 75, thus the S accumulation position moving flag is OFF.

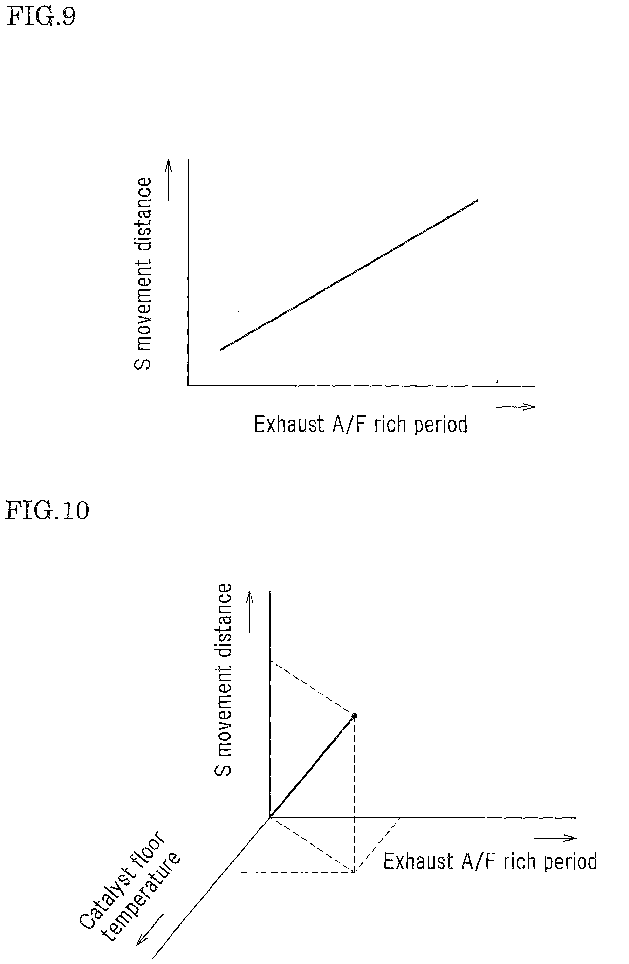

If the S accumulation position moving flag is OFF and it is determined "NO" in step ST2, the procedure advances to step ST3, in which the accumulation position of the sulfur component (S accumulation position) in the NSR catalyst 75 is estimated. Specifically, the estimation of the S accumulation position is to estimate the accumulation amount peak position in the NSR catalyst 75. As described above, at the time of starting the S poisoning recovery control, the accumulation amount peak position is at the front end portion of the NSR catalyst 75 (upstream end portion in the direction of the flow of the exhaust gas). On the other hand, after the S poisoning recovery control is started, the SOx accumulation distribution changes in the NSR catalyst 75 (see FIG. 7) as described above, thus the accumulation amount peak position is estimated according to the length of the rich period. The relationship between the length of the rich period and the accumulation amount peak position is obtained in advance by experiments. FIG. 9 is a diagram showing a relationship between the cumulative time of the rich period and the movement distance of the sulfur component (corresponding to the movement distance of the accumulation amount peak position). Thus, as the cumulative time of the rich period is increased, the movement distance of the sulfur component becomes long, and the accumulation amount peak position is moved toward the rear end portion of the NSR catalyst 75.

Also, the movement distance of the sulfur component changes not only by the length of the rich period but also by the catalyst floor temperature. Thus, the movement distance of the sulfur component may be estimated based on the catalyst floor temperature. Specifically, as the catalyst floor temperature is high, the sulfur component desorbs effectively, thereby the movement distance of the sulfur component becomes long. FIG. 10 is a diagram showing a relationship between the movement distance of the sulfur component, and the cumulative time of the rich period and the catalyst floor temperature. As can be seen from the above, the longer the cumulative time of the rich period is and the higher the catalyst floor temperature is, the longer the movement distance of the sulfur component is, and thus the accumulation amount peak position is moved toward the rear end position of the NSR catalyst 75.

After execution of such an estimation of the S accumulation position in the NSR catalyst 75 (estimation of the accumulation amount peak position), the procedure advances to the step ST4, in which it is determined whether the S accumulation position is moved to a predetermined position. As the predetermined position, for example, the center position of the NSR catalyst 75 in the direction of the flow of the exhaust gas can be given. That is, in step ST4, it is determined whether the accumulation distribution of the sulfur component matches that indicated by the solid line in FIG. 7.

If the S accumulation position is not yet moved to the predetermined position and it is determined "NO" in step ST4, the procedure advances to step ST5, in which the target exhaust air-fuel ratio (A/F) is set to the strong rich. For example, the control of the after-injection amount and the control of the opening degree of the intake throttle valve 62 are executed so that the exhaust A/F is 13.5. In this case, the amount of the after-injection and the opening degree of the intake throttle valve 62 are obtained in advance by experiments and simulations so as to obtain the strong rich. The target exhaust A/F in this case is set regardless of the catalyst floor temperature.

In this way, under the target exhaust A/F set to the strong rich, the procedure returns to step ST3, in which the S accumulation position in the NSR catalyst 75 is re-estimated. The estimation operation in this case is the same as the above-described case.

Thus, the target exhaust A/F is fixed to the strong rich until the S accumulation position in the NSR catalyst 75 reaches the predetermined position (i.e., until it is determined "YES" in step ST4).

If the S accumulation position in the NSR catalyst 75 reaches the predetermined position and it is determined "YES" in step ST4, the procedure advances to step ST6, in which the S accumulation position moving flag is turned to ON, and in step ST7, it is determined whether the floor temperature (catalyst floor temperature) of the NSR catalyst 75 is less than or equal to a predetermined value β. The predetermined value β is to set the target exhaust A/F after the S accumulation position in the NSR catalyst 75 reaches the predetermined position. The predetermined value β is set, for example, to 650°C. This value is not limited thereto. It may be appropriately set.

If the catalyst floor temperature exceeds the predetermined value β and it is determined "NO" in step ST7, the procedure advances to step ST8, in which the target exhaust A/F is set to the weak rich. For example, the control of the after-injection amount and the control of the opening degree of the intake throttle valve 62 are executed so that the exhaust A/F is 14.2. In this case, the after-injection amount and the opening degree of the intake throttle valve 62 are obtained in advance by experiments and simulations so that the weak rich is obtained. As described above, in the exhaust A/F in this case, the weak rich degree of the exhaust air-fuel ratio may be increased (i.e., the exhaust air-fuel ratio may be increased) as the temperature of the NSR catalyst 75 is increased.

On the other hand, if the catalyst floor temperature is less than or equal to the predetermined value β and it is determined "YES" in step ST7, the procedure advances to step ST9, in which the target exhaust A/F is set to the strong rich. For example, the control of the after-injection amount and the control of the opening degree of the intake throttle valve 62 are executed so that the exhaust A/F is 13.5. In this case also, the after-injection amount and the opening degree of the intake throttle valve 62 are obtained in advance by experiments and simulations so that the strong rich is obtained. As described above, in the exhaust A/F in this case, the strong rich degree of the exhaust air-fuel ratio may be increased (i.e., the exhaust air-fuel ratio may be decreased) as the temperature of the NSR catalyst 75 is decreased.

After the target exhaust A/F is set to the weak rich or the strong rich in this way, the procedure advances to step ST10, in which it is determined whether the floor temperature (catalyst floor temperature) of the NSR catalyst 75 is less than or equal to a predetermined value γ. The predetermined value γ is a temperature at which the sulfur component cannot be reduced even if the exhaust A/F is set to the strong rich. The predetermined value γ is set, for example, to 550°C. This value is not limited thereto. It may be appropriately set.

If the catalyst floor temperature exceeds the predetermined value γ (i.e., the catalyst floor temperature more than the predetermined value γ is maintained) and it is determined "NO" in step ST10, the procedure advances to step ST11, in which it is determined whether an S discharge amount from the NSR catalyst 75 reaches a predetermined amount. The predetermined amount is the S discharge amount to terminate the S poisoning recovery control. The predetermined amount is set, for example, to a value corresponding to the SOx absorbing amount at the time of starting the S poisoning recovery control or a value that is slightly smaller than the SOx accumulation amount at the time of starting the S poisoning recovery control. As described above, the S discharge amount from the NSR catalyst 75 can be obtained based on the catalyst floor temperature and the length of the rich period.

If the S discharge amount from the NSR catalyst 75 does not reach the predetermined amount, it is determined "NO" in step ST11 and the procedure returns to step ST7. That is, the following operations are repeated: determining whether to the strong rich or to the weak rich the target exhaust A/F should be set according to the catalyst floor temperature; and adjusting the exhaust A/F. In other words, from the state in which the catalyst floor temperature exceeds the predetermined value β and the target exhaust A/F is set to the weak rich, when the catalyst floor temperature is decreased to be less than or equal to the predetermined value β, the control is executed to shift the target exhaust A/F to the strong rich.

On the other hand, if the S discharge amount from the NSR catalyst 75 reaches the value more than or equal to the predetermined amount and it is determined "YES" in step ST11, the processing for termination of the S poisoning recovery control is executed and the S accumulation position moving flag is turned to OFF in step ST12. That is, the shift of the air-fuel ratio between rich and lean, and the post-injection are stopped. Thus, the S poisoning recovery control is terminated, and control is shifted to normal engine control with the NOx absorption performance of the NSR catalyst 75 being recovered.

If the floor temperature (catalyst floor temperature) of the NSR catalyst 75 is decreased to a value less than or equal to the predetermined value γ during the operations that determines whether to the strong rich or to the weak rich the target exhaust A/F should be set according to the catalyst floor temperature and that adjusts the exhaust A/F, the sulfur component cannot be reduced even if the exhaust A/F is set to the strong rich. Thus, it is determined "YES" in step ST10 and the procedure advances to step ST13, in which the lean period control is executed. That is, by executing the post-injection after the main injection, control for effectively increasing the catalyst floor temperature is performed (see the aspect of the fuel injection indicated in FIG. 4(a)). Then, the floor temperature (catalyst floor temperature) of the NSR catalyst 75 reaches the value more than or equal to the predetermined value α, it is determined "YES" in step ST1 and the above rich period control is re-executed.

As described above, in this embodiment, when the catalyst floor temperature exceeds the predetermined value at the time when the sulfur component may begin to be discharged from the NSR catalyst 75, the weak rich control is selected. Thus, the discharge amount of the sulfur component per unit time that is discharged from the NSR catalyst 75 is reduced, thereby the degradation of the exhaust emission and the worsening of malodor of the exhaust gas can be reduced. On the other hand, when the catalyst floor temperature is less than or equal to the predetermined value, the strong rich control is selected. Thus, the discharge of the sulfur component accumulated in the NSR catalyst 75 is promoted, thereby the time period required to discharge substantially the total amount of the sulfur component can be reduced and the fuel consumption rate can be improved.

Also, after the sulfur poisoning recovery control is started, the strong rich control is executed until the accumulation amount peak position reaches the center position of the NSR catalyst 75 in the direction of the flow of the exhaust gas. Thus, the sulfur component can desorb within relatively short time after the sulfur poisoning recovery control is started. By this means also, the time period required to execute the sulfur poisoning recovery control can be shortened.

### -Other Embodiment-

In the above-described embodiment, the description is given on the case in which the present invention is applied to an in-line four-cylinder diesel engine mounted on a vehicle. The present invention is not limited to use in a vehicle. The present invention is also applicable to engines used in other applications. The number of cylinders or the engine type (classified as an in-line engine, V-type engine, horizontal opposed engine, and the like) are not particularly limited. Furthermore, the present invention can be applied to a gasoline engine.

Also, in the above embodiment, the post-injection from the injector 23 is performed as the means for supplying the fuel to the exhaust system 7 in the S poisoning recovery control. The present invention is not limited thereto. The present invention is also applicable to the case in which the S poisoning recovery control is performed by the fuel supplied from the fuel addition valve 26 that supplies directly the fuel to the exhaust system 7 (e.g., exhaust manifold 72).

Also, in the above embodiment, the description is given on the case in which the strong rich control or the weak rich control is selected according to the catalyst floor temperature at the time when the accumulation amount peak position reaches the center position of the NSR catalyst 75 in the direction of the flow of the exhaust gas. The present invention is not limited thereto. The strong rich control or the weak rich control may be selected according to the catalyst floor temperature before the sulfur component is discharged from the NSR catalyst 75. For example, the strong rich control or the weak rich control may be selected according to the catalyst floor temperature at the time when the accumulation amount peak position reaches a position of 2/3 distance from the front end portion of the NSR catalyst 75 in the direction of the flow of the exhaust gas.

### Industrial Applicability

The present invention is applicable to S poisoning recovery control performed on a NOx storage/reduction catalyst in a diesel engine mounted on a vehicle.

### Description of Reference Numerals

- 1: Engine (internal combustion engine)
- 23: Injector (fuel injection valve)
- 3: Combustion chamber
- 62: Intake throttle valve
- 7: Exhaust system
- 75: NSR catalyst (exhaust purification catalyst)
- 100: ECU

## Claims

1. A control device for an internal combustion engine, the control device configured to perform sulfur poisoning recovery control that reduces and purifies, by enriching an exhaust air-fuel ratio, a sulfur component accumulated in an exhaust purification catalyst provided in an exhaust system of the internal combustion engine so that the sulfur component is discharged,
wherein the exhaust purification catalyst is an NOx storage/reduction catalyst that is configured to treat NOx by absorbing NOx in exhaust emission, and by reducing and releasing the absorbed NOx,
wherein, after the sulfur poisoning recovery control is started, a strong rich control for setting the exhaust air-fuel ratio less than a predetermined value is performed until a temperature of the exhaust purification catalyst is increased to a temperature at which the accumulated sulfur component is capable of desorbing so that movement of the accumulated sulfur component is started in the exhaust purification catalyst,
wherein, when the movement of the accumulated sulfur component is started in the exhaust purification catalyst, and at a time when an amount of the movement reaches a predetermined amount that is obtained based on at least a length of a period when the strong rich control is performed out of: the length of the period when the strong rich control is performed; and the temperature of the exhaust purification catalyst, either the strong rich control for setting the exhaust air-fuel ratio less than the predetermined value or a weak rich control for setting the exhaust air-fuel ratio more than or equal to the predetermined value is selected according to the temperature of the exhaust purification catalyst, and
wherein, at the time when the amount of the movement of the accumulated sulfur component in the exhaust purification catalyst reaches the predetermined amount, the weak rich control is selected when the temperature of the exhaust purification catalyst exceeds a predetermined value while the strong rich control is selected when the temperature of the exhaust purification catalyst is less than or equal to the predetermined value.

2. The control device for the internal combustion engine according to claim 1,
wherein an operation to select either the strong rich control or the weak rich control according to the temperature of the exhaust purification catalyst is performed at a time when a position of the largest accumulation amount of the sulfur component reaches a center portion in the exhaust purification catalyst in a direction of a flow of an exhaust gas by the movement of the sulfur component in the exhaust purification catalyst.

3. The control device for the internal combustion engine according to claim 1 or 2,
wherein the amount of the movement of the sulfur component in the exhaust purification catalyst is obtained based on a length of a period when the strong rich control is performed, and
wherein as the length of the period when the strong rich control is performed becomes longer, a larger amount of the movement of the sulfur component is obtained.

4. The control device for the internal combustion engine according to claim 1 or 2,
wherein the amount of the movement of the sulfur component in the exhaust purification catalyst is obtained based on a length of a period when the strong rich control is performed and the temperature of the exhaust purification catalyst, and
wherein as the length of the period when the strong rich control is performed becomes longer and the temperature of the exhaust purification catalyst becomes higher, a larger amount of the movement of the sulfur component is obtained.

5. The control device for the internal combustion engine according to any one of claims 1 to 4,
wherein, when the weak rich control is selected due to the temperature of the exhaust purification catalyst exceeding a predetermined value, the exhaust air-fuel ratio is set larger as the temperature of the exhaust purification catalyst becomes higher.

6. The control device for the internal combustion engine according to any one of claims 1 to 5,
wherein, when the strong rich control is selected due to the temperature of the exhaust purification catalyst being less than or equal to a predetermined value, the exhaust air-fuel ratio is set smaller as the temperature of the exhaust purification catalyst becomes lower.

## Patentansprüche

1. Steuervorrichtung für eine Verbrennungskraftmaschine, wobei die Steuervorrichtung so konfiguriert ist, dass sie eine Schwefelvergiftungserholungssteuerung durchführt, die durch Anreichern eines Abgas-Luft-/Kraftstoff-Verhältnisses einen Schwefelbestandteil reduziert und reinigt, der in einem Abgasreinigungskatalysator gesammelt ist, der sich in einem Abgassystem der Verbrennungskraftmaschine befindet, so dass der Schwefelbestandteil ausgestoßen wird,
wobei der Abgasreinigungskatalysator ein NOₓ-Speicher-/Reduktions-Katalysator ist, der so konfiguriert ist, dass er NOₓ behandelt, indem er NOₓ im Abgasausstoß absorbiert, und durch Reduzieren und Freisetzen des absorbierten NOₓ,
wobei, nachdem die Schwefelvergiftungserholungssteuerung gestartet wurde, eine starke Fettsteuerung, um das Abgas-Luft-/Kraftstoff-Verhältnisses niedriger einzustellen als einen vorgegebenen Wert, durchgeführt wird, bis eine Temperatur des Abgasreinigungskatalysators auf eine Temperatur erhöht wird, bei der der angesammelte Schwefelbestandteil in der Lage ist, zu desorbieren, so dass eine Bewegung des angesammelten Schwefelbestandteils in dem Abgasreinigungskatalysator gestartet wird,
wobei, wenn die Bewegung des gesammelten Schwefelbestandteils in dem Abgasreinigungskatalysator und zu einer Zeit gestartet wird, da eine Bewegungsmenge eine vorgegebene Menge erreicht, die auf Basis von zumindest einer Länge einer Zeitspanne, wenn die starke Fettsteuerung durchgeführt wird, von der Länge der Zeitdauer, wenn die starke Fettsteuerung durchgeführt wird; und der Temperatur des Abgasreinigungskatalysators, erhalten wird, entweder die starke Fettsteuerung, um das Abgas-Luft-/Kraftstoff-Verhältnis niedriger als den vorgegebenen Wert einzustellen oder eine schwache Fettsteuerung, um das Abgas-Luft-/KraftstoffVerhältnis höher als oder gleich dem vorgegebenen Wert einzustellen, gemäß der Temperatur des Abgasreinigungskatalysators eingestellt wird, und
wobei, zu der Zeit, da die Bewegungsmenge des angesammelten Schwefelbestandteils in dem Abgasreinigungskatalysator die vorgegebene Menge erreicht, die schwache Fettsteuerung ausgewählt wird, wenn die Temperatur des Abgasreinigungskatalysators einen vorgegebenen Wert überschreitet, während die starke Fettsteuerung ausgewählt wird, wenn die Temperatur des Abgasreinigungskatalysators geringer als oder gleich dem vorgegebenen Wert ist.

2. Steuervorrichtung für die Verbrennungskraftmaschine nach Anspruch 1,
wobei ein Vorgang, entweder die starke Fettsteuerung oder die schwache Fettsteuerung gemäß der Temperatur des Abgasreinigungskatalysators auszuwählen, zu einer Zeit durchgeführt wird, da eine Position der größten Ansammlungsmenge des Schwefelbestandteils durch die Bewegung des Schwefelbestandteils in dem Abgasreinigungskatalysator einen Mittelabschnitt in dem Abgasreinigungskatalysator in einer Strömungsrichtung eines Abgases erreicht.

3. Steuervorrichtung für die Verbrennungskraftmaschine nach Anspruch 1 oder 2,
wobei die Bewegungsmenge des Schwefelbestandteils in dem Abgasreinigungskatalysator auf Basis einer Länge einer Zeitdauer, während der die starke Fettsteuerung durchgeführt wird, erhalten wird, und
wobei, umso mehr die Länge der Zeitdauer, wenn die starke Fettsteuerung durchgeführt wird, zunimmt, eine desto größere Bewegungsmenge des Schwefelbestandteils erhalten wird.

4. Steuervorrichtung für die Verbrennungskraftmaschine nach Anspruch 1 oder 2,
wobei die Bewegungsmenge des Schwefelbestandteils in dem Abgasreinigungskatalysator auf Basis einer Länge einer Zeitdauer, in der die starke Fettsteuerung durchgeführt wird, und der Temperatur des Abgasreinigungskatalysators erhalten wird, und
wobei, umso mehr die Länge der Zeitdauer, wenn die starke Fettsteuerung durchgeführt wird, zunimmt, und die Temperatur des Abgasreinigungskatalysators steigt, eine desto größere Bewegungsmenge des Schwefelbestandteils erhalten wird.

5. Steuervorrichtung für die Verbrennungskraftmaschine nach einem der Ansprüche 1 bis 4,
wobei, wenn die schwache Fettsteuerung aufgrund der Temperatur des Abgasreinigungskatalysators, die einen vorgegebenen Wert überschreitet, ausgewählt wird, das Abgas-Luft-/Kraftstoff-Verhältnis in dem Maße höher eingestellt wird, in dem die Temperatur des Abgasreinigungskatalysators zunimmt.

6. Steuervorrichtung für die Verbrennungskraftmaschine nach einem der Ansprüche 1 bis 5,
wobei, wenn die starke Fettsteuerung ausgewählt wird, weil die Temperatur des Abgasreinigungskatalysators niedriger als oder gleich einem vorgegebenen Wert ist, das Abgas-Luft-/Kraftstoff-Verhältnis desto niedriger eingestellt wird, umso niedriger die Temperatur des Abgasreinigungskatalysators wird.

## Revendications

1. Dispositif de commande pour un moteur à combustion interne, le dispositif de commande étant configuré pour exécuter une commande de récupération de soufre nocif qui réduit et purifie, en enrichissant un rapport air/carburant d'échappement, un composant de soufre accumulé dans un catalyseur de purification d'échappement prévu dans un système d'échappement du moteur à combustion interne de sorte que le composant de soufre soit évacué,
dans lequel le catalyseur de purification d'échappement est un catalyseur de réduction/de stockage de NOx qui est configuré pour traiter les NOx en absorbant les NOx dans les émissions d'échappement, et en réduisant et en dégageant les NOx absorbés,
dans lequel, après que la commande de récupération de soufre nocif a débuté, une commande d'enrichissement destinée à définir le rapport air/carburant d'échappement comme étant inférieur à une valeur prédéterminée est exécutée jusqu'à ce qu'une température du catalyseur de purification d'échappement soit augmentée jusqu'à une température à laquelle le composant de soufre accumulé est capable d'être désorbé de sorte que le mouvement du composant de soufre accumulé soit lancé dans le catalyseur de purification d'échappement,
dans lequel, lorsque le mouvement du composant de soufre accumulé est lancé dans le catalyseur de purification d'échappement, et au moment où une quantité de mouvement atteint une quantité prédéterminée qui est obtenue sur la base d'au moins une durée pendant laquelle la commande d'enrichissement est exécutée, parmi : la durée de période pendant laquelle la commande d'enrichissement est exécutée ; et la température du catalyseur de purification d'échappement, la commande d'enrichissement destinée à définir le rapport air/carburant d'échappement comme étant inférieur à la valeur prédéterminée ou une commande d'affaiblissement destinée à définir le rapport air/carburant d'échappement comme étant supérieur ou égal à la valeur prédéterminée est sélectionnée selon la température du catalyseur de purification d'échappement, et
dans lequel, au moment où la quantité de mouvement du composant de soufre accumulé dans le catalyseur de purification d'échappement atteint la quantité prédéterminée, la commande d'affaiblissement est sélectionnée lorsque la température du catalyseur de purification d'échappement dépasse une valeur prédéterminée, tandis que la commande d'enrichissement est sélectionnée lorsque la température du catalyseur de purification d'échappement est inférieure ou égale à la valeur prédéterminée.

2. Dispositif de commande pour un moteur à combustion interne selon la revendication 1,
dans lequel une opération destinée à sélectionner soit la commande d'enrichissement, soit la commande d'affaiblissement selon la température du catalyseur de purification d'échappement est exécutée à un moment auquel une position de la plus grande quantité d'accumulation du composant de soufre atteint une partie centrale dans le catalyseur de purification d'échappement dans une direction découlement d'un gaz d'échappement par le mouvement du composant de soufre dans le catalyseur de purification d'échappement.

3. Dispositif de commande pour un moteur à combustion interne selon la revendication 1 ou 2,
dans lequel la quantité de mouvement du composant de soufre dans le catalyseur de purification d'échappement est obtenue sur la base d'une durée pendant laquelle la commande d'enrichissement est exécutée, et
dans lequel, à mesure que la durée d'exécution de la commande d'enrichissement augmente, une plus grande quantité de mouvement du composant de soufre est obtenue.

4. Dispositif de commande pour un moteur à combustion interne selon la revendication 1 ou 2,
dans lequel la quantité de mouvement du composant de soufre dans le catalyseur de purification d'échappement est obtenue sur la base d'une durée pendant laquelle la commande d'enrichissement est exécutée et de la température du catalyseur de purification d'échappement, et
dans lequel, à mesure que la durée d'exécution de la commande d'enrichissement augmente et que la température du catalyseur de purification d'échappement devient plus élevée, une plus grande quantité du mouvement du composant de soufre est obtenue.

5. Dispositif de commande pour un moteur à combustion interne selon l'une quelconque des revendications 1 à 4,
dans lequel, lorsque la commande d'affaiblissement est sélectionnée en raison de la température du catalyseur de purification d'échappement qui dépasse une valeur prédéterminée, le rapport air/carburant d'échappement est défini comme étant plus élevé à mesure que la température du catalyseur de purification d'échappement devient plus élevée.

6. Dispositif de commande pour un moteur à combustion interne selon l'une quelconque des revendications 1 à 5,
dans lequel, lorsque la commande d'enrichissement est sélectionnée en raison de la température du catalyseur de purification d'échappement qui est inférieure ou égale à une valeur prédéterminée, le rapport air/carburant d'échappement est défini comme étant moins élevé à mesure que la température du catalyseur de purification d'échappement devient plus faible.
